# EUROPÄISCHE PATENTSCHRIFT

(11) **EP 3 623 038 B1**
(45) Veröffentlichungstag und Bekanntmachung des Hinweises auf die Patenterteilung: **12.01.2022**
(21) Anmeldenummer: 18194151.9
(22) Anmeldetag: 13.09.2018
(51) Int. Cl.: B01D 63/08

(54) **MEMBRANTASCHENMODUL MIT VERDREHSICHEREM AUFBAU**
MEMBRANE BAG MODULE WITH ROTATIONALLY SECURE STRUCTURE
MODULE DE POCHE MEMBRANE POURVU D'UNE CONSTRUCTION RÉSISTANTE À LA TORSION

(43) Veröffentlichungstag der Anmeldung: 18.03.2020
(73) Patentinhaber: Helmholtz-Zentrum hereon GmbH, 21502 Geesthacht (DE)
(72) Erfinder: Scholles, Carsten, 21035 Hamburg (DE)
(74) Vertreter: Uexküll & Stolberg

(56) Entgegenhaltungen:
- EP-A1- 1 475 142
- WO-A1-96/20775
- DE-A1- 3 715 183
- DE-C1- 19 536 560
- US-A- 5 500 122
- US-A- 5 520 807

## Beschreibung

### HINTERGRUND DER ERFINDUNG

Die Erfindung betrifft Membranmodule, insbesondere Membrantaschenmodule, die in einem Gehäuse mit mindestens einem Feedeinlass, mindestens einem Retentatauslass und mindestens einem Permeatauslass angeordnete Membran-Taschenstapel umfassen. Die Erfindung betrifft auch die Verwendung des erfindungsgemäßen Membranmoduls zur Trennung von Flüssigkeits- und/oder Gasgemischen.

Bevor Membranen in technischen Prozessen nutzbar gemacht werden können, müssen sie in eine praktisch handhabbare, anwendungsspezifische Anordnung eingesetzt werden. Die dabei entstehenden Membrankonfigurationen werden als Membranmodule bezeichnet. In einem Membranmodul wird ein Zulaufstrom (Feed) in einen Konzentratstrom (Retentat) und in einen Filtratstrom (Permeat) aufgeteilt.

Flachmembranen werden in der Trenn- und Anreicherungstechnik u.a. in Taschenform verwendet. Bei Taschenmembranen (auch als Kissenmembranen bezeichnet) werden zwei einzelne Flachmembranen mit einem dazwischen liegenden Spacer an den Rändern zu einer Tasche (einem Kissen) verschweißt oder verklebt. In der Membrantasche zentrierte Bohrungen ermöglichen die Permeatabfuhr aus dem Innenbereich der Membrantaschen in Richtung eines Permeatrohres, das durch die Bohrungen gesteckt ist. Die Stapelung der Taschen zu einem Modul erfolgt in der Regel abwechselnd mit Dichtringen, so dass kein Retentat in das Permeatrohr gelangen kann.

Die um das Permeatrohr aufgesteckten Membrantaschen werden in einem Gehäuse installiert, wobei das Feed die Membrantaschen umströmen kann. Das Permeat der Taschen wird zentral nach innen abgeleitet und über das Permeatrohr abgeführt, das über Abschlussscheiben an zwei Stirnseiten des die Membrantaschen umgebenden Gehäuses hinausragt und mit diesem mit Hilfe von Permeatkappen angeflanscht ist. Bei einem GS-Taschenmodul umströmt das Feed die Membrantaschen bevorzugt mäanderförmig, hervorgerufen durch in den Membranstapel zusätzlich eingebrachte Umlenkscheiben, die das Membranmodul in Unterabschnitte (Kompartmentbereiche) unterteilt.

Aus der DE-PS 35 07 908, auf die hier vollständig Bezug genommen wird, ist ein solches GS-Taschenmodul bekannt, wobei Membranen von einem Gehäuse mit zwei Stirnplatten umgeben, im Abstand zueinander gestapelt sind und eine zentrale Innenbohrung aufweisen, in die ein Permeatrohr eingesteckt ist. Die Stirnplatten (Abschlussscheiben) schließen das Gehäuse dichtend an dessen Stirnseiten ab und weisen eine Zuleitung für den Feedstrom, eine Ableitung für den Retentatstrom und mindestens eine zentrale Ableitung für den Permatstrom auf (Fig. 9). In den Membranstapel eingebrachte Umlenkscheiben bewirken eine mäanderförmige Umströmung der Membrantaschen durch das Feed.

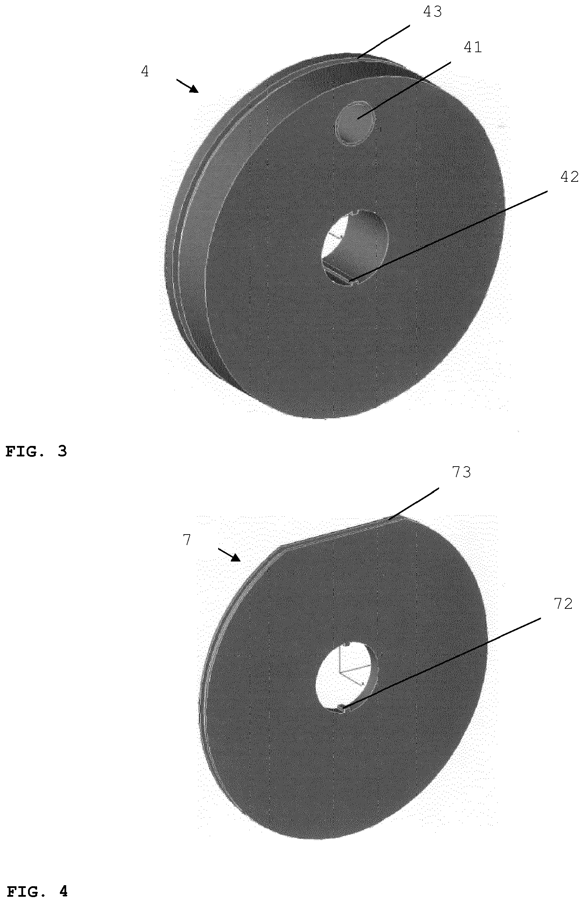

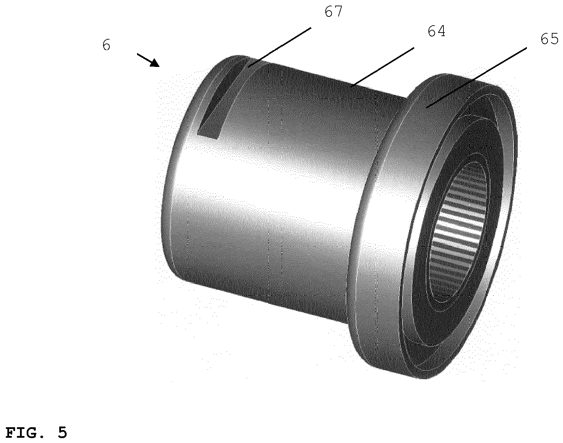

Der Aufbau derartiger GS-Taschenmodule wird des Weiteren in T. Melin, R. Rautenbach "Membranverfahren - Grundlagen der Modul- und Anlagenauslegung", 3. Aufl., 2007, Seiten 170 bis 172 und Abb. 5.22. und V. Nitsche et al. "Abtrennung organischer Dämpfe mit Membranen", Chemie Ingenieur Technik (70), Seite 515, Abb. 3 beschrieben, auf die hier vollständig Bezug genommen wird. Weitere Membranmodule mit gestapelten Membrantaschen an einem Permeatrohr sind aus US5500122, US5520807, WO9620775 oder DE3715183 bekannt. EP1475142 beschreibt Membranstapel mit Nut-Feder-Verbindungselementen die die Membranplatten in einem Stapel miteinander verbinden.

Zur Herstellung der Membrantaschenmodule wird zunächst das Permeatrohr mit einer der Abschlussscheiben für das Gehäuse verbunden, die Taschenmembranen und Umlenkscheiben über das Permeatrohr gestapelt und anschließend, in ein Gehäuse eingebracht, mit der zweiten Abschlussscheibe verbunden. Die Taschenmembranen und Umlenkscheiben dann in dem Gehäuse mit Hilfe einer Presse auf eine vorbestimmte Größe zusammengepresst. Das über die Abschlussscheiben hinausragende Permeatrohr wird mit Hilfe von Permeatkappen an den Abschlussscheiben fixiert und der Druck der Presse wird entspannt. Die Presse ist notwendig, um die mäanderförmige Umströmung der Membrantaschen zu gewährleisten.

Im Betrieb können sich die Permeatkappen lösen, die Permeatrohr und Abschlussscheiben miteinander fixieren. Nachteilig bei den bekannten GS-Membranmodulen ist es, dass sich beim Wiederanziehen der Permeatkappen die Abschlussscheiben und - hervorgerufen durch die Drehung der Abschlussscheiben - die Membranstapel und die Umlenkscheiben verdrehen, was zu Effizienzverlusten bis hin zur Unbrauchbarkeit der Membran führen kann. Auch lassen sich die Membrantaschen nicht ohne Presse austauschen.

Aufgabe der vorliegenden Erfindung ist es ein Membranmodul der eingangs genannten Art bereitzustellen, bei dem sich die Membrantaschen auf einfache Art austauschen lassen.

Gelöst wird die Aufgabe durch ein Membranmodul gemäß Patentanspruch 1. Bevorzugte Ausführungsformen sind in den Unteransprüchen wiedergegeben.

### BESCHREIBUNG DER ERFINDUNG

Das Membranmodul der vorbekannten Art umfasst ein Gehäuse, das an zwei Stirnseiten mittels Abschlussscheiben druckdicht zur Bildung eines Behälterinnenraums verschlossen ist. Die Abschlussscheiben umfassen mindestens einen Feedeinlass, mindestens einen Retentatauslass und einen Permeatauslass, wobei in dem Behälterinnenraum mindestens ein Membrantaschenstapel angeordnet ist, der eine Mehrzahl von aneinandergereihten und voneinander durch Dichtungen getrennte Membrantaschen aufweist, die auf ein Permeatrohr augesteckt sind. Das Permeatrohr ragt über den mindestens einen Permeatauslass der Abschlussscheiben hinaus. Das erfindungsgemäße Membranmodul ist dadurch gekennzeichnet, dass Permeatrohr und Permeatauslass der Abschlussscheiben über eine Nut-Federverbindung wechselseitig ausgerichtet sind.

Gemäß einer Ausführungsform der vorliegenden Erfindung umfassen die Membrantaschenstapel weiterhin mittels einer Zentralbohrung auf das Permeatrohr aufgesteckte Umlenkscheiben, wobei die Umlenkscheiben jeweils Aussparungen zur Leitung eines Feedstroms von dem mindestens einem Feedeinlass zu dem mindestens einen Retentatauslass in mäanderförmiger Feedströmung aufweisen und Permeatrohr und Umlenkscheiben ebenfalls über eine Nut-Federverbindung wechselseitig ausgerichtet sind. Die Umlenkscheiben unterteilen die Membrantaschen-stapel in Kompartmentbereiche. Gemäß einer bevorzugten Ausführungsform nimmt die Anzahl der Membrantaschen in den durch die Umlenkscheiben unterteilten Kompartmentbereichen in Richtung vom mindestens einen Feedeinlass zum mindestens einen Retentatauslass ab.

Gemäß einer weiteren Ausführungsform der vorliegenden Erfindung ist an dem Permeatrohr weiterhin eine Stufen-Trennscheibe befestigt. Die Stufen-Trennscheibe kann an dem Permeatrohr beispielsweise mittels eines Innengewindes durch anschrauben oder durch anschweißen befestigt werden. Die Stufen-Trennscheibe unterteilt das Gehäuse in zwei Stufen, die - von der jeweils entgegengesetzten Seite mit unterschiedlichen Membranstapeln bestückt werden können. Die Stufen können aber auch einseitig mit Membranstapeln bestückt werden, so dass eine Seite der Stufe ungenutzt bleibt. Die Stufen-Trennscheiben sind bevorzugt innenseitig verschlossen, so dass unterschiedliche Permeatströme an unterschiedlichen Enden des Permeatrohres abgeführt werden können.

Gemäß einer weiteren Ausführungsform der vorliegenden Erfindung ist im Permeatrohr mindestens eine Nut und jeweils in dem Permeatauslass der Abschlussscheiben sowie, falls vorhanden, in der Zentralbohrung der Umlenkscheiben jeweils mindestens eine Feder vorgesehen. Weiter bevorzugt sind im Permeatrohr zwei Nuten sowie in dem Permeatauslass der Abschlussscheiben und, falls vorhanden, den Zentralbohrungen der Umlenkscheiben jeweils zwei Federn vorgesehen. Weiter bevorzugt sind die Nuten im Permeatrohr und die Federn jeweils um 180° versetzt.

Gemäß einer weiteren Ausführungsform der vorliegenden Erfindung ist das Gehäuse ein druckresistentes Gehäuse. Das Gehäuse ist vorzugsweise zylinderförmig. Des Weiteren ist bevorzugt auch das Permeatrohr zylinderförmig und ragt über die Abschlussscheiben des Gehäuses durch eine zentrale Bohrung darüber hinaus.

Es hat sich überraschenderweise gezeigt, dass der Aufbau des erfindungsgemäßen Membranmoduls es ermöglicht das Membranmodul herzustellen oder die Membranen zu erneuern, ohne dass eine Presse notwendig ist.

Das erfindungsgemäße Membranmodul kann zur Trennung von Flüssigkeits- und/oder Gasgemischen verwendet werden. Besonders vorteilhaft wird das erfindungsgemäße Membranmodul zur Emissionsminderungan Atmungseitungen von Lagertanks verwendet, wie es in der EP 0 752 974 B1 beschrieben ist, auf die hier vollständig Bezug genommen wird. Vorteilhaft ist dabei, dass sich Membrantaschen insbesondere bei agressiven Umgebungen, bei denen die Membrantaschen eine kurze Lebenszeit haben, auf einfache Art austauschen lassen, ohne dass die Anlage an den Hersteller versendet werden muss.

### DETAILLIERTE BESCHREIBUNG DER ERFINDUNG

Die Erfindung wird nunmehr beispielhaft anhand von Figuren näher erläutert, die die Erfindung nicht einschränken und in denen:
**FIG. 1** eine schematische Darstellung eines erfindungsgemäßen Membranmoduls ist, wobei in der Figur das Gehäuse, Abschlussscheiben, Umlenkscheiben, Permeatrohr und Permatkappen, nicht jedoch Membranstapel dargestellt sind;
**Fig. 2** eine schematische Darstellung eines Permeatrohres mit einer montierten Umlenkscheibe ist, das im erfindungsgemäßen Membranmodul verwendbar ist;
**Fig. 3** eine schematische Darstellung einer Abschlussscheibe ist, die im erfindungsgemäßen Membranmodul verwendbar ist;
**Fig. 4** eine schematische Darstellung einer Umlenkscheibe ist, die im erfindungsgemäßen Membranmodul verwendbar ist;
**Fig. 5** eine schematische Darstellung einer Permeatkappe ist, die im erfindungsgemäßen Membranmodul verwendbar ist.

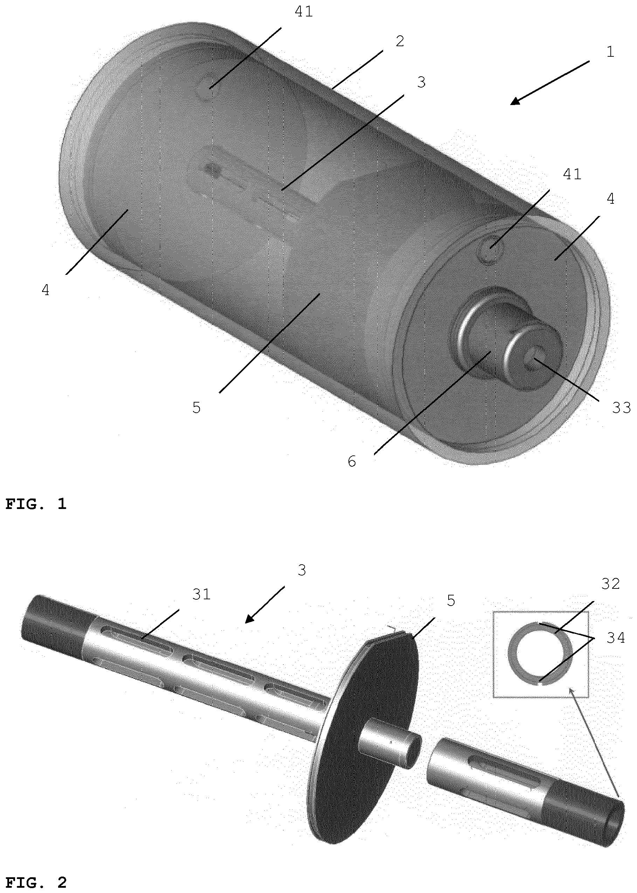

Zurückkommend auf **Fig. 1** weist das erfindungsgemäße Membranmodul **1** weist ein Gehäuse **2** auf, welches an zwei Stirnseiten mittels Abschlussscheiben **4** druckdicht zur Bildung eines Behälterinnenraums verschlossen ist. In den Abschlussscheiben **4** befinden sich Bohrungen **41** für den Feedeinlass bzw. den Retentatauslass. In den Abschlussscheiben **4** befinden sich des Weiteren Bohrungen zum Durchstecken eines Permeatrohrs **3,** welche Bohrungen **41,** wie hier beispielshaft gezeigt, zentral in den Abschlussscheiben **4** angeordnet sein können. Das Permeatrohr **3** ist beidseitig mittles einer Permeatkappe **6** an mindestens eine der Abschlussscheiben **4** angeflanscht. Mindestens ein Ende des Permeatrohrs **3** umfasst einen Permeatauslass **33.**

Ein oder mehrere Umlenkscheiben **7** (Fig. 4) befinden sich in dem Gehäuse, wobei die Umlenkscheiben **7** jeweils Aussparungen zur Leitung eines Feedstroms von dem mindestens einem Feedeinlass **41** zum mindestens einen Retentatauslass in mäanderförmiger Feedströmung aufweisen. Die Umlenkscheiben **7** weisen ebenfalls eine Bohrung zum Durchstecken eines Permeatrohrs **3** auf, die zentral in den Umlenkscheiben **7** angeordnet sein können. In der Regel ist in dem Gehäuse eine Mehrzahl von Umlenkscheiben **7,** beispielsweise zwei, drei, vier, fünf, sechs, sieben, acht, neun oder zehn oder noch mehr Umlenkscheiben **7** zur Bildung einer Mehrzahl von Kompartmentabschnitten des Membranmoduls angeordnet. Zwischen den Abschlussscheiben **4** bzw. zwischen Umlenkscheiben **7** und Abschlussscheiben **4** bzw. zwischen den Umlenkscheiben **7** sind Membrantaschenstapel (nicht gezeigt) angeordnet, die den Feedstrom in einen Retentatstrom und einen Permatstrom aufteilen. Die Stapelung der Taschen erfolgt bevorzugt abwechselnd mit Dichtringen, so dass kein Retentat in das Permeatrohr gelangen kann. Das Permeat der Taschen wird zentral nach innen abgeleitet und über das Permeatrohr abgeführt.

**Fig. 1** zeigt beispielhaft eine Anordnung mit einer Stufen-Trennscheibe **5,** die das Membranmodul in unterschiedliche Stufen aufteilt.

**Fig. 2** zeigt eine schematische Darstellung eines erfindungsgemäßen Permeatrohres **3** mit montierter Stufen-Trennscheibe **5.** Das gezeigte Permeatrohr **3** weist einen runden Permeatrohrquerschnitt **32** auf, der mit zwei Nuten **34** versehen ist, die um 180° versetzt sind. Das Permeatrohr weist eine Mehrzahl (z.B. zwei, drei, vier, fünf, sechs, sieben, acht, neun, zehn, elf, zwölf, dreizehn, vierzehn, fünfzehn, sechzehn oder noch mehr) von Permeateinlassbohrungen **31** zur Aufnahme des Permeatstroms aus den Membrantaschen auf. Das Permeatrohr **3** kann einteilig oder sein, so dass eine Stufen-Trennscheibe aufgesetzt und bei Bedarf wieder entfernt werden kann. In Fig. **2** wird ein zweiteiliges Permeatrohr **3** gezeigt, bei dem eine Stufen-Trennscheibe **5** an das Permeatrohr **3** mittels eines Innengewindes geschraubt oder angeschweißt wird. Umlenkscheiben **7** (Fig. 4), die innerhalb einer Membranstufe diese in Kompartmentbereiche unterteilen, werden zusammen mit den Membranstapeln auf das Permeatrohr **3** aufgesteckt.

Bevorzugt weist die Stufen-Trennscheibe **5** einen im Wesentlichen kreisförmigen Querschnitt auf, der mit dem Querschnitt des Gehäuses in Beziehung steht, wobei jedoch der Querschnitt an einem Kreissegment abgeflacht ist, so dass der Feedstrom innerhalb des Gehäuses von einer Stufe in die nächste gelangen kann. Bevorzugt weist die Stufen-Trennscheibe eine Nut um deren Umfang auf, in die eine Dichtung, wie eine Gummidichtung eingesetzt werden kann. Das Permeatrohr **3** weist vorzugsweise mindestens ein Außengewinde, bevorzugt mindestens zwei Außengewinde zur Fixierung mindestens einer Permeatkappe **6,** bevorzugt von zwei Permeatkappen **6** auf. Es ist auch vorgesehen, dass das Permeatrohr **3** zweiteilig ist, wobei ein Teil des Permeatrohres **3** an dessen Enden ein zwei Außengewinde, einerseits zur Fixierung der Permeatkappe **6** mittels eines Innengewindes in der Permeatkappe **6** trägt und andererseits zur Fixierung einer Stufen-Trennscheibe **5** mittels eines Innengewindes in der Stufen-Trennscheibe **5** sowie eines zweiten Teils des Permeatrohres **3** über ein Innengewinde des zweiten Teils des Permeatrohres **3.** Der zweite Teil des Permeatrohres **3** weist an einem Ende ein Innengewinde zur Fixierung der des ersten Teils des Permeatrohres **3** auf dessen Außengewinde und dazwischenliegend der Stufen Trennscheibe und an seinem anderen Ende ein Außengewinde zur Fixierung der Permeatkappe **6.**

Der Permeatauslass **33** erfolgt zentral über das Permeatrohr, z.B. durch Anlegen eines Unterdrucks. Ist das Membranmodul **1** durch eine Stufen-Trennscheibe **5** in zwei Stufen unterteilt, so erfolgt der Permeatauslass **33** der jeweiligen Stufen an entgegengesetzten Seiten des Permeatrohres **3;** mithin sind bei dieser Konfiguration zwei Permeatauslässe **33** vorgesehen.

**Fig. 3** zeigt eine erfindungsgemäße Abschlussscheibe **4,** die das Gehäuse **2** (Fig. 1) an beiden Seiten abschließt. Die gezeigte Abschlussscheibe **4** weist einen kreisförmigen Querschnitt auf, der mit dem Querschnitt des Gehäuses in Beziehung steht. Zur gasdichten Abdichtung ist bevorzugt eine Dichtungsnut **43** für die Aufnahme einer Dichtung, wie einer Gummidichtung, vorgesehen. Die Abschlussscheibe **4** weist mindestens eine Bohrung **41** zum Einlass eines Feedstroms bzw. zum Auslass eines Retentastroms auf (Feedeinlassbohrung/Retentatauslassbohrung **41).** Des Weiteren weist die Abschlussscheibe **4** eine Bohrung zum Durchstecken des Permeatrohres **3** (Fig. 1) auf, die im vorliegenden Fall zentral angeordnet ist. Die Bohrung weist einen kreisförmigen Querschnitt auf, der mit dem Permeatrohrquerschnitt **32** (Fig. 2) in Beziehung steht. Zudem weist die Bohrung mindestens eine Feder **42** zur wechselseitigen Ausrichtung von Permeatrohr **3** und Abschlussscheibe **4** auf. Die gezeigte Abschlussscheibe **4** weist einen runden Querschnitt auf, der mit zwei Federn **42** versehen ist, die um 180° versetzt sind.

**Fig. 4** zeigt eine erfindungsgemäße Umlenkscheibe **7,** die über das Permeatrohr gesteckt werden kann. Die gezeigte Umlenkscheibe **4** weist einen im Wesentlichen kreisförmigen Querschnitt auf, der mit dem Querschnitt des Gehäuses in Beziehung steht, wobei jedoch der Querschnitt an einem Kreissegment abgeflacht ist, so dass der Feedstrom innerhalb des Membranmoduls von einem Kompartmentbereich in den nächsten gelangen kann. Bevorzugt werden die Umlenkscheiben mit ihren abgeflachten Kreissegmenten um jeweils 180° versetzt in das Gehäuse eingebaut, so dass der Feedstrom von dem mindestens einem Feedeinlass **41** (Fig. 1) zum mindestens einen Retentatauslass in mäanderförmiger Feedströmung gelangt. Zur gasdichten Abdichtung ist bevorzugt eine Dichtungsnut **73** für die Aufnahme einer Dichtung, wie einer Gummidichtung, vorgesehen.

Die Umlenkscheibe **7** weist eine Bohrung zum Durchstecken des Permeatrohres **3** (Fig. 1) auf, die im vorliegenden Fall zentral angeordnet ist. Die Bohrung weist einen kreisförmigen Querschnitt auf, der mit dem Permeatrohrquerschnitt **32** (Fig. 2) in Beziehung steht. Zudem weist die Bohrung mindestens eine Feder **72** zur wechselseitigen Ausrichtung von Permeatrohr **3** und Umlenkscheibe **7** auf. Die gezeigte Umlenkscheibe **7** weist einen runden Querschnitt auf, der mit zwei Federn **72** versehen ist, die um 180° versetzt sind.

**Fig. 6** zeigt eine Permeatkappe **6,** die zum Anflanschen des Permeatrohres **3** an der Abschlussscheibe in einem Flanschbereich **65** dient. Die Permeatkappe **6** weist bevorzugt en Innengewinde auf, das mit dem Außengewinde an den Enden des Permeatrohres **3** in Beziehung steht. Die Permeatkappe **6** hat vorzugsweise einen zylindrischen Permeatkappenkörper **64,** in dem eine Schlüsselnut **67** zur Fixierung der Permeatkappe **6** auf dem Permeatrohr **3** mittels eines Schlüsselwerkzeugs vorgesehen ist. Alternativ kann der Permeatkappenkörper auch eckig, z.B. sechseckig ausgebildet sein, so dass er mit Hilfe eines Schlüselwerkzeugs an dem Permeatrohr festgeschraubt werden kann.

### Bezugszeichen:

- 1: Membranmodul
- 2: Gehäuse
- 3: Permeatrohr
- 4: Abschlussscheibe
- 5: Stufen-Trennscheibe
- 6: Permeatkappe
- 7: Umlenkscheibe
- 31: Permeateinlassbohrungen
- 32: Permeatrohrquerschnitt
- 33: Permeatauslass
- 34: Nut
- 41: Feedeinlassbohrung/Retentatauslassbohrung
- 42: Feder
- 43: Dichtungsnut
- 64: Permeatkappenkörper
- 65: Flanschbereich
- 67: Schlüsselnut
- 72: Feder
- 73: Dichtungsnut

## Patentansprüche

1. Membranmodul (1), das ein Gehäuse (2) umfasst, welches an zwei Stirnseiten mittels Abschlussscheiben (4) druckdicht zur Bildung eines Behälterinnenraums verschlossen ist und die Abschlussscheiben (4) mindestens einen Feedeinlass (41), mindestens einen Retentatauslass und mindestens einen Permeatauslass (33) umfassen, wobei in dem Behälterinnenraum mindestens ein Membrantaschenstapel angeordnet ist, der eine Mehrzahl von aneinandergereihten und voneinander durch Dichtungen getrennte Membrantaschen aufweist, die auf ein Permeatrohr (3) aufgesteckt sind, wobei das Permeatrohr über den mindestens einen Permeatauslass (33) der Abschlussscheiben hinausragt, **dadurch gekennzeichnet, dass** Permeatrohr (3) und Abschlussscheiben (4) über eine Nut-Federverbindung am Permeatrohr (3) und dem Permeatauslass der Abschlussscheiben (4) wechselseitig ausgerichtet sind.

2. Membranmodul (1) nach Anspruch 1, **dadurch gekennzeichnet, dass** die Membrantaschenstapel weiterhin mittels einer Zentralbohrung auf das Permeatrohr (3) aufgesteckte Umlenkscheiben (5) umfassen, wobei die Umlenkscheiben (5) jeweils Aussparungen zur Leitung eines Feedstroms von dem mindestens einem Feedeinlass (41) zum mindestens einen Retentatauslass in mäanderförmiger Feedströmung aufweisen, wobei auch Permeatrohr (3) und Umlenkscheiben (5) über eine Nut-Federverbindung wechselseitig ausgerichtet sind.

3. Membranmodul (1) nach einem der Ansprüche 1 oder 2, **dadurch gekennzeichnet, dass** mindestens eine Nut im Permeatrohr (3) und jeweils mindestens eine Feder (42) in dem Permeatauslass der Abschlussscheiben (4) sowie, falls vorhanden, jeweils mindestens eine Feder (52) in der Zentralbohrung der Umlenkscheiben (5) vorgesehen ist.

4. Membranmodul (1) nach Anspruch 3, **dadurch gekennzeichnet, dass** im Permeatrohr (3) zwei Nuten sowie in dem Permeatauslass der Abschlusscheiben (4) und, falls vorhanden, den Zentralbohrungen der Umlenkscheiben (5) jeweils zwei Federn (42, 52) vorgesehen sind, die um 180° versetzt sind.

5. Verwendung eines Membranmoduls (1) gemäß einem der vorgehenden Ansprüche zur Trennung von Flüssigkeits- und/oder Gasgemischen.

6. Verwendung gemäß Anspruch 5, zur Emissionsminderung an Atmungsleitungen von Lagertanks.

## Claims

1. Membrane module (1) which comprises a housing (2) which for forming a container interior space by means of finisher discs (4) at two end sides is closed in a pressure-tight manner, and the finisher discs (4) comprise at least one feed inlet (41), at least one retentate outlet, and at least one permeate outlet (33), wherein at least one membrane pocket stack which has a plurality of membrane pockets which are lined up beside one another and are mutually separated by seals and which are push-fitted onto a permeate tube (3) is disposed in the container interior space, wherein the permeate tube protrudes beyond the at least one permeate outlet (33) of the finisher discs, **characterized in that** the permeate tube (3) and the finisher discs (4) by way of a key-and-groove connection are aligned in an alternating manner on the permeate tube (3) and the permeate outlet of the finisher discs (4).

2. Membrane module (1) according to Claim 1, **characterized in that** the membrane pocket stacks furthermore comprise deflection discs (5) that by means of a central bore are push-fitted onto the permeate tube (3), wherein the deflection discs (5) have in each case recesses for directing in a meandering feed stream a feed flow from the at least one feed inlet (41) to the at least one retentate outlet, wherein the permeate tube (3) and the deflection discs (5) by way of a key-and-groove connection are also aligned in an alternating manner.

3. Membrane module (1) according to one of Claims 1 or 2, **characterized in that** at least one groove is provided in the permeate tube (3), and at least one feather key (42) is in each case provided in the permeate outlet of the finisher discs (4) and, if present, at least one feather key (52) is in each case provided in the central bore of the deflection discs (5).

4. Membrane module (1) according to Claim 3, **characterized in that** two grooves are provided in the permeate tube (3), and two feather keys (42, 52) are in each case provided in the permeate outlet of the finisher discs (4) and, if present, the central bores of the deflection discs (5), said two feather keys (42, 52) being offset by 180°.

5. Use of a membrane module (1) according to one of the preceding claims, for separating mixtures of liquids and/or gases.

6. Use according to Claim 5, for reducing the emissions on breathing lines of storage tanks.

## Revendications

1. Module de membrane (1) comprenant un boîtier (2) qui est fermé de manière étanche à la pression sur deux faces frontales par des plaques d'extrémité (4) pour former un espace interne de récipient, les disques d'extrémité (4) comportant au moins une entrée d'alimentation (41), au moins une sortie de rétentat et au moins une sortie de perméat (33), sachant qu'il est prévu dans l'espace interne de récipient, au moins une pile de membranes poches présentant une pluralité de membranes poches qui sont disposées les unes à la suite des autres, sont séparées par des joints d'étanchéité et sont rapportées sur un tube à perméat (3), le tube à perméat dépassant au-delà de la sortie de perméat (33), au nombre d'au moins une, des disques d'extrémité, **caractérisé en ce que** le tube à perméat (3) et les disques d'extrémité (4) sont alignés les uns par rapport aux autres par un assemblage à rainure et languette sur le tube à perméat (3) et par la sortie de perméat des disques d'extrémité (4).

2. Module de membrane (1) selon la revendication 1, **caractérisé en ce que** les piles de membranes poches comprennent en outre des disques déflecteurs (5) rapportés sur le tube à perméat (3) au moyen d'un trou central, les disques déflecteurs (5) présentant chacun des évidements pour guider un flux d'alimentation depuis l'entrée d'alimentation (41), au nombre d'au moins une, jusqu'à la sortie de rétentat, au nombre d'au moins une, avec un écoulement d'alimentation en forme de méandres, le tube à perméat (3) et les disques déflecteurs (5) étant eux aussi alignés les uns par rapport aux autres par un assemblage à rainure et languette.

3. Module de membrane (1) selon l'une des revendications 1 ou 2, **caractérisé en ce qu'**il est prévu au moins une rainure dans le tube à perméat (3) et respectivement au moins une languette (42) dans la sortie de perméat des disques d'extrémité (4) et, lorsqu'il existe, respectivement au moins une languette (52) dans le trou central des disques déflecteurs (5).

4. Module de membrane (1) selon la revendication 3, **caractérisé en ce que** deux rainures sont prévues dans le tube à perméat (3) et respectivement deux languettes (42, 52) sont prévues dans la sortie de perméat des disques d'extrémité (4) et, lorsqu'ils existent, dans les trous centraux des disques déflecteurs (5), avec un décalage de 180°.

5. Utilisation d'un module de membrane (1) selon l'une des revendications précédentes, à des fins de séparation de mélanges de liquides et/ou de gaz.

6. Utilisation selon la revendication 5, à des fins de réduction des émissions sur des tubes d'aération de réservoirs de stockage.
